Europäisches Patentamt

European Patent Office

Office européen des brevets

(19)

(11) **EP 0 584 662 B1**

(12) **EUROPEAN PATENT SPECIFICATION**

(45) Date of publication and mention
of the grant of the patent:
**14.05.1997 Bulletin 1997/20**

(51) Int Cl.⁶: **H04N 5/44**

(21) Application number: **93112927.4**

(22) Date of filing: **12.08.1993**

(54) **Method and apparatus for doubling the vertical and horizontal frequency of a video signal**

Verfahren und Apparat zur Verdoppelung der vertikalen und horizontalen Frequenz eines Videosignals

Méthode et appareil pour doubler la fréquence horizontale et verticale d'un signal vidéo

(84) Designated Contracting States:
**DE FR GB IT NL**

(30) Priority: **25.08.1992 FI 923808**

(43) Date of publication of application:
**02.03.1994 Bulletin 1994/09**

(73) Proprietor: **NOKIA TECHNOLOGY GmbH
75175 Pforzheim (DE)**

(72) Inventor: **Salonen, Jouni
SF-33820 Tampere (FI)**

(56) References cited:
**EP-A- 0 396 229          EP-A- 0 550 231**

• **IEEE TRANSACTIONS ON CONSUMER
ELECTRONICS vol. 38, no. 3, August 1992, NEW
YORK US pages 162 - 167 KARLSSON ET AL.
'EVALUATION OF SCANNING RATE UP
CONVERSION ALGORITHMS; SUBJECTIVE
TESTING OF INTERLACED TO PROGRESSIVE
CONVERSION'**

## Description

The invention relates to a method and to an apparatus by which an image shown on a cathode-ray tube and produced by interlaced scanning in accordance with a normal standard is converted into high definition standard image (HDTV) by edge detection so that the number of pixels is doubled both horizontally and vertically.

A television image in accordance with a normal standard (eg. PAL, NTSC) with an aspect ratio of 4:3, is formed of an image made by interlaced scanning, in which one field consists of 625 lines of which 575 are active lines. When an analogue video signal is converted into a digital signal 720 active samples are obtained for one line, so the normal standard image format can be marked as 720*576/50 Hz/2:1. The following completely new generation television is HDTV (High Definition Television), in which the aspect ratio is 16:9 and the number of lines is 1250 of which 1152 are active lines. The number of samples in a line is 1440 so the HDTV format can be marked as 1440*1152/50 Hz/2:1. The number of pixels is four times higher than in the systems now in use.

The HDTV system will be introduced in stages, so that material filmed by a traditional camera will be used in broadcasts for a long time and will be broadcast by the traditional format. So it is important that the owner of an HDTV receiver can also watch these broadcasts. Therefore the HDTV-television must include a feature by which the number of samples is doubled both horizontally and vertically. This doubling can be done so that the vertical and horizontal processing is done separately, and consequently the enlargement of the sample density can be done in two stages. Processing in both directions can also be done simultaneously.

In the Finnish patent application FI-A-37425, Salora Oy, a method is presented to enlarge the number of pixels in both directions. The pixels of the starting image in the method form an orthogonal sample pattern. This pattern is first converted into a quincunx-sample pattern by interpolating in the first interpolator the first new pixels between the original lines, in which case the new pixels form new optional lines. The quincunx-sample pattern obtained this way is then converted into an orthogonal pattern by interpolating in the second interpolator the new pixels between the pixels of both original lines and new lines, so that the density of the elements is doubled both horizontally and vertically. This method is suitable for use both intra field and interfield, but a disadvantage is that in the latter case the image must be converted into a progressive noninterlaced image in some known way. In this method as in most known methods separate edge detection and an interpolator selected according to its result are not used, but efforts are made to detect the edge by comparing the sample candidate to its neighbors and by using limits for the sample values. The omission of edge detection simplifies the methods because fixed algorithms can be used.

Edge detection is, however, vitally important in the recognition of an object. When watching at an object it is identified by looking at its edges and corners and their serration and sharpness. Therefore in image processing it is important to detect the local image content and interpolate according to it. Serration, breaking of line and lack of sharpness in the edge zones and blur of the details of an image, which are typical to the known methods using a fixed algorithm, are greatly dependant on the direction of the edge zone. The aim of edge detection is thus to study which is the right interpolation direction. In order to find the right direction, reliable edge information must be obtained on the environment of the pixel to be interpolated. When the direction is found, it is possible to select the interpolator that is suitable for a particular direction.

More advanced sample density enlargement methods are, indeed, edge adaptive interpolation methods. An edge detection method is presented in the Finnish patent application FI-A-921676, applicant Salon Televisiotehdas Oy corresponding to EP-A-0 565 948, published 20.10.1993. According to this, it is possible to double the sample density of the progressive image to be shown horizontally and vertically so, that in a 3∗3 window the direction of the sample in the middle of the window is examined using suitably selected operators. The direction may be horizontal, vertical, 45°, 135° or it may not have any clear direction. When edge information has been calculated, consistency checking is also done in the 3∗3 window and edge information is corrected if necessary. After this three new samples are interpolated in the direction shown by the edge information beside the sample in the middle of the window, and two of these samples are located in the line to be formed. The disadvantage of this method is that the original image must be progressive and that the edge detection is done "only" in four directions.

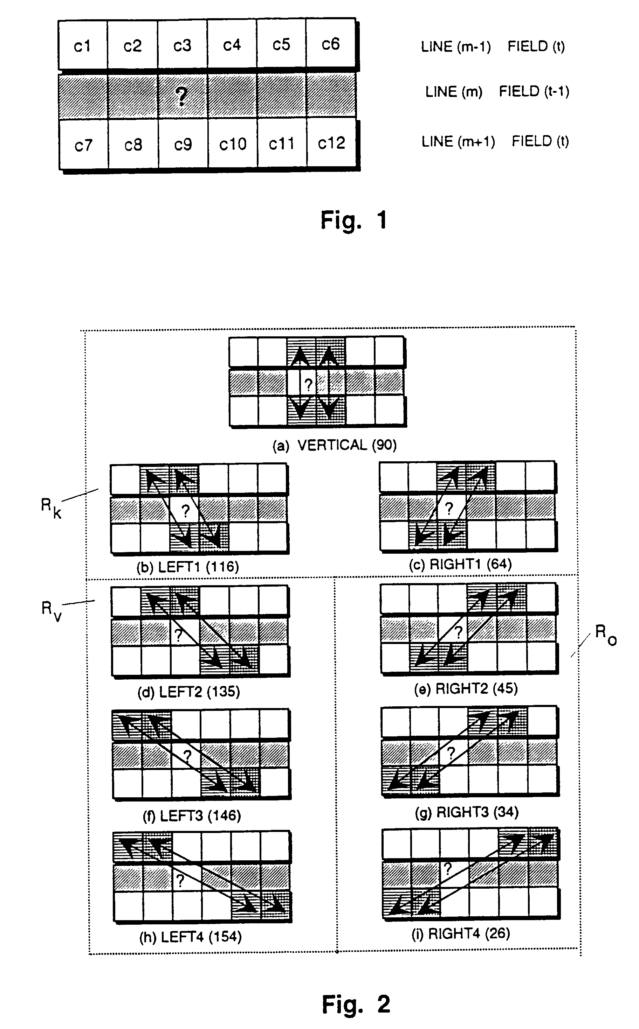

The Finnish patent application FI-A-916195, applicant Salon Televisiotehdas Oy corresponding to EP-A-0 550 231, published 7.7.1993, which application is included as a reference to the present application, presents an effective edge detector that functions in a 6*3 window, by which it is possible to identify the edge in nine directions. The recognition is done inside the field. In figure 1 the 6*3 window used in the detection is presented, which consists of 6 pixels c1, c2, c3, c4, c5 and c6 from line m-1 located next to each other also 6 pixels c7, c8, c9, c10, c11 and c12 next to each other from the following line m+1 of the same field t. By means of the pixels of these lines, the edge estimate value, which is marked by a question mark ?, of a pixel of the line to be interpolated between, must be calculated. Figures 2a-i present the possible directions of the edge line and the pixel pairs included in the calculation in each case. In figure la it is examined if the edge line is at a 90 degree angle, in figures b, d, f, and h if the line leans to the left in directions 116, 135, 146 and 154 degrees and in figures c, e, g and i if the line leans to the right in directions 26, 34, 45, and 64 degrees.

These nine separate cases are divided into three groups to be examined: the middle group Rk, in which the directions 64, 90 and 116 degrees (figures a, b and c) to be examined are included, the right group Ro, in which the directions 26, 34 and 45 degrees (figures e, g and j) are included and the left group Rv, in which the directions 135, 146 and 154 degrees (figures d, f and h) to be examined are included. Each possible edge direction is examined by calculating four pixels using the sum of absolute values of the pixel differences. In figure 2 arrow points of a solid line show the locations of pixel pairs to be calculated in the difference in each case. First, responses are calculated for each edge direction as follows:

$$\underline{\text{Middle group Rk:}}$$

$$\text{vertical} = c_3 - c_9 + c_4 - c_{10}$$

$$\text{right1} = c_3 - c_8 + c_4 - c_9$$

$$\text{left1} = c_2 - c_9 + c_3 - c_{10}$$

$$\underline{\text{Left group Rv:}}$$

$$\text{left2} = c_2 - c_{10} + c_3 - c_{11}$$

$$\text{left2} = c_1 - c_{10} + c_2 - c_{11}$$

$$\text{left2} = c_1 - c_{11} + c_2 - c_{12}$$

$$\underline{\text{Right group Ro:}}$$

$$\text{right2} = c_4 - c_8 + c_5 - c_9$$

$$\text{right3} = c_4 - c_7 + c_5 - c_8$$

$$\text{right4} = c_5 - c_7 + c_6 - c_8$$

When all 9 direction responses have been calculated group by group, a minimum group response is sought. When the minimum response of each group has been obtained, the smallest value of the minimum values is sought, the minimum of minimums, which is marked by TOTmin.

When, by using the formats presented in the window of figure 1, the minimum value and direction in each group has been calculated and the location in each group of the TOTmin has been clarified, this data is saved in the memory as an estimate. So the value of the estimate of the pixel marked by a question mark is formed of four pieces of data:

1) minimum direction response of group Ro
2) minimum direction response of group Rv
3) minimum direction response of group Rk
4) TOTmin, which shows in which group the minimum response is the smallest.

By sliding the window an estimate of the pixel on the right side of the pixel marked by a question mark is calculated and so on, and then the pixel estimates of the following line to be interpolated, until a sufficient amount of edge information is saved in the neighborhood of the pixel to be interpolated and marked by a question mark. Based on this edge information, in other words estimates em, the final edge information is then determined in the consistency checking circuit, which determines by comparing the edge information to the edge information of neighboring pixels and by using a suitable consistency checking method, whether the edge information is acceptable. After this an interpolation is done in the direction shown by the edge information.

This invention shows a way by which the vertical and horizontal frequency in accordance with the PAL, NTSC and SECAM systems can be doubled at one processing stage by using adaptive interpolation and so that different direction edges remain solid and the image does not get blurry. In the other field of the image the interpolated pixel values are corrected so that they better correspond to the right points in the HDTV raster. If a correction is not made, a so-called motion judder takes place in some moving sequences, in other words, the movement does not advance smoothly but with vibrations.

The fundamental characteristics of the invention are defined in independent claims 1 and 6 and specific embodiments are presented in the dependant claims.

According to the invention the edge detector presented previously in the patent application FI-916195 is used to define the edge direction on the points of pixels to be interpolated. Thus six following pixels of a single line in the same field, six pixels in the same field of the following line placed below these pixels, and three pixels of a previous field scanned between these lines' pixels form the input of the circuit enlarging the sample density. So there are fifteen inputs in a circuit, which form a 6*3 window in which the middle row of samples is incomplete.

Independent of whether the original incoming field is even or odd numbered, according to the first embodiment the interpolation of new samples is alike. The original raster is first made denser so that the four raster points of the new field correspond now to the raster point of the original sample, to which the new values are then interpolated. The necessary edge information at the raster point of the original sample, in other words, the direction of the edge at its point is determined by the pixels in the highest and lowest rows of the window. When this direction is known the selected new samples calculate the interpolators according to the edge information. All samples of the window are used in the calculation of new samples.

According to the second embodiment of the invention the other new sample values of, eg. the odd numbered field, are calculated in accordance with the first embodiment, but in the interpolation of the samples of the other, in this case, the even numbered field, the new sample values obtained in accordance with the first embodiment are not sufficient. Based on them new final sample values are also calculated. Motion judder can be effectively prevented this way. It does not matter if the additional interpolations are done in the odd or even numbered field.

The invention is illustrated by the attached schematic figures, in which

| figure 1 | presents the window used for the edge detection, |
| figure 2 | presents the pixels included in the edge detection in various directions in the known method, |
| figure 3 | presents the 6∗3 window formed by the input pixels according to the method of the invention, |
| figure 4 | presents the HDTV image area inside the field to be formed of the pixels of the window presented in figure 3, |
| figure 5a | presents the calculation of new samples according to the second embodiment, |
| figures 5b and c | present the calculation of new samples of the second field according to the second embodiment, |
| figure 6 | shows the pixels to be used in edge detection when using the raster presented in figure 5, |
| figure 7 | presents the HDTV image area. |

Figures 1 and 2, which are connected to the edge detector to be used have already been explained and when necessary further in the text they will be referred to.

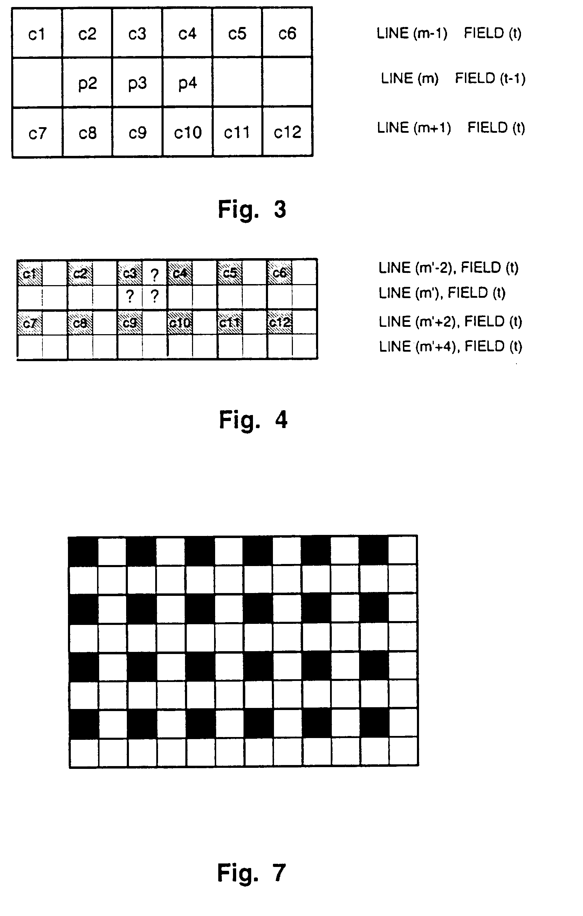

Figure 3 presents the input raster of the performing circuit of the method. Six following pixels from each following lines m-1 and m+1 of the same field t come to the input: c1, c2, c3, c4, c5 and c6 from line m-1, pixels c7, c8, c9, c10, c11 and c12 with corresponding horizontal position from the following line m+1. The symbol c (current) refers to the current field t. In addition, three following pixels p2, p3 and p4 (the symbol p comes from the word previous) from the line m, that is scanned between lines m-1 and m+1, of the previous field t-1, come to the input so that pixel p3 is at the same horizontal position as pixels c3 and c9. So the input pixels form a 6∗3 window in accordance with figure 3 which can also be called an input raster.

As a final output raster a figure in accordance with figure 4 must be obtained in which the darkened pixels are pixels obtained from the lines m-1 and m+1 of the original figure 3 and the light squares between them are the new interpolated pixels. Naturally the original pixel can be substituted by the interpolated pixel but it is not, however, sensible. The original raster point c3 is rastered into four raster points, of which the question marked pixels are the ones that are calculated in the window. The uppermost line is now line m'-2 of the HDTV field, the next is the line m' that must be completely interpolated and correspondingly the two following lines are m'+2 and m'+4. As can be noticed the sample density has doubled horizontally and vertically so that the output is a sample space in accordance with the high definition standard. Since samples are constantly coming into the window four HDTV-field samples will be interpolated for each incoming sample.

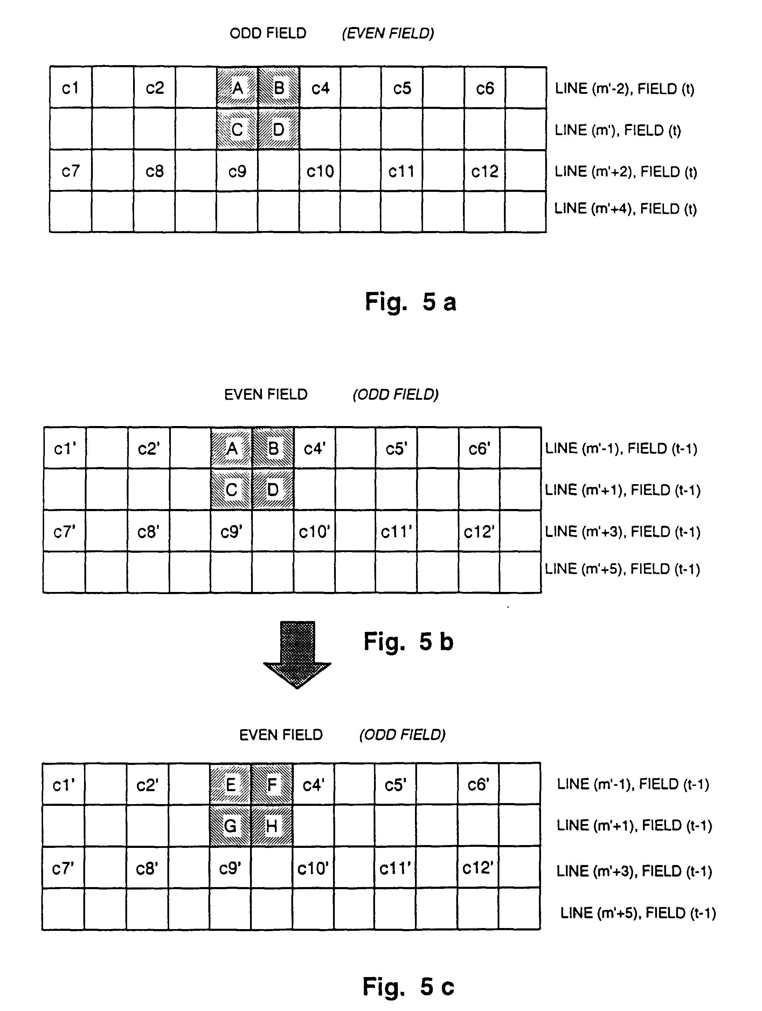

The following presentation based on figure 5a describes how the new pixels A, B, C and D corresponding to pixel c3 are formed. The description is, however, applicable to all new pixels to be formed since new pixels are constantly coming into the window, in accordance with figure 3, as the field is received. The pixels p2, p3 and p4 of the previous field will be read from the memory.

In figure 5a the first rastered sample row corresponds to the line m'-2 of the high definition field, the second rastered line corresponds to the line m' of the high definition field t, and the third correspondingly to the line m'+2 of the high definition field t. The samples to be calculated are marked with letters A, B, C and D. As can be noticed the position of the sample A is the same as that of the known sample c3, and it is beneficial to select the value of c3 as its value, so that A = c3. The average of the neighboring known samples will be selected as the value of sample B which corresponds to the pixel marked with a question mark and located on the right side of the known sample c3 in figure 4, so that B = 1/2*(c3+c4). Therefore every second pixel of this line is a known original sample and the other ones are new interpolated samples.

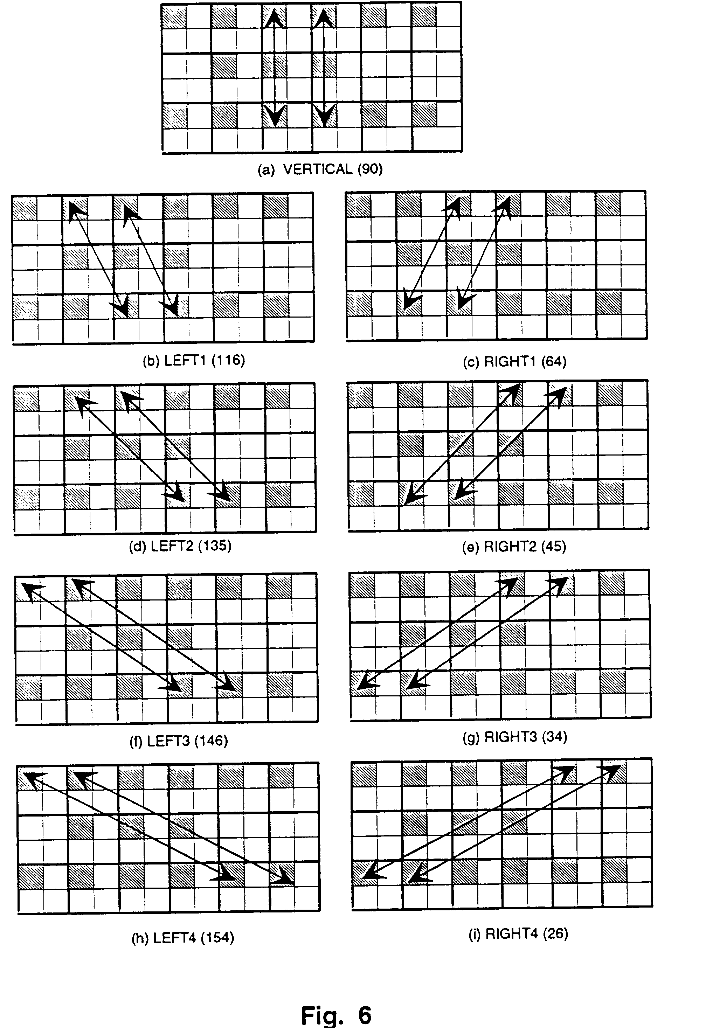

When calculating the values of the new pixels C and D, which correspond to the question-marked pixels in the line m' in figure 4, the direction of the possible edge at the point of the pixels C and D (figure 5a), in other words edge information, must be calculated. For this only samples in the highest and lowest lines in the window of figure 3 are used, which samples thus originate from the same original field t of the following lines m-1, m+1. Edge detection takes place in principle the same way as has been explained previously, in other words, the edge information estimate is defined at the point of the pixel C to be interpolated, which is corresponding to the middle point of the rastered window, figure 6. The edge detection is done in nine directions and in each direction the pixels to be taken are marked in figures 6a-6i by arrow points. The calculation formats (formats (1)) are shown in the previous page 4. So figures 6a-6i present the 6*3 calculation window of figure 5 in which the known samples are presented only as darkened squares for the sake of simplicity. In the text below figures the number inside the brackets signifies the direction of the edge, eg. in figure h there is a negative diagonal edge the direction of which is 154 degrees. As can be noticed figure 6 is analogous to figure 2 when the zero samples marked in white are imagined as eliminated.

When the edge information estimate of the pixel C to be interpolated, figure 5 a, between the pixels c3 (=A) and c9 is calculated and the desired type of consistency checking is done, the final edge information is obtained. The consistency checking can also be of a different type than that presented in the above mentioned Finish application FI-A-016195. The final numeric value can now be calculated for the samples C and D by using the samples presented in the window of figure 3.

The median and linear operations used in the calculation of the numeric value are defined according to the edge information as follows: If the consistency checking has given the edge information "left 4" to the new line sample C to be interpolated in the new line below the sample c3, figure 5a, or in other words the edge is negatively diagonal in the angle of 154 degrees, the values of A and B pixels are, as already mentioned, and the values of pixels C and D are determined using 3-point linear and median operations. The calculation formats are then:

Left 4    A = c3
          B = 1/2*(c3 + c4)
          C = Med3(c1, p3, c11)
          D = 1/2*{Med3(c1, p3, c11)+Med3 (c2, p4, c12)}

Depending on the direction of the angle obtained by the consistency checking the following values are calculated to samples A, B, C and D:

Left 3    A = c3
          B = 1/2*(c3 + c4)
          C =1/2*{Med3(c1, p2, c10)+Med3(c2, p3, c11)}
          D = Med3(c2, p3, c11)

Left 2    A = c3
          B = 1/2*(c3 + c4)
          C = Med3(c2, p3, c10)
          D =1/2*{Med3(c2, p3, c10)+Med3(c3, p4, c11)}

Left 1    A = c3
          B = 1/2*(c3 + c4)
          C =1/2*{Med3(c2, p2, c9)+Med3 (c3, p3, c10)}
          D = Med3(c3, p3, c10)

Vertical  A = c3
          B = 1/2*(c3 + c4)
          C = Med3(c3, p3, c9)
          D =1/2*{Med3(c3, p3, c9)+Med3 (c4, p4, c10)}

Right 1   A = c3
          B = 1/2*(c3 + c4)

C = 1/2*{Med3(c3, p3, c8)+Med3 (c4, p3, c9)}
D = Med3(c4, p3, c9)

Right 2    A = c3 B = 1/2*(c3 + c4)
           C = Med3(c4, p3, c8)
           D = 1/2*{Med3(c4, p3, c8)+Med3(c5, p4, c9)}

Right 3    A = c3 B = 1/2*(c3 + c4)
           C = 1/2*{Med3(c4, p2, c7)+Med3(c5, p3, c8)}
           D = Med3(c5, p3, c8)

Right 4    A = c3
           B = 1/2*(c3 + c4)
           C = Med3(c5, p3, c7)
           D = 1/2*{Med3(c5, p3, c7)+Med3(c6, p4, c8)}

In the formats above Med3 ( ) means a three point median operation in which the output of the interpolator is the median of its three inputs. As can be noticed the pixel B is always interpolated as the average of the known pixels c3 and c4 and is then independent of the edge direction while the value of pixels C and D is dependant on the edge direction.

The sample density is enlarged by the method described above independent of whether the receiving field is odd or even numbered. Motion judder will, however, occur in the evenly advancing movement of some evenly-moving image areas because the values of the new samples do not completely correspond to their place in the HDTV raster. Therefore it is more beneficial to interpolate the new pixels of the received odd and even numbered fields in a different way. This very beneficial embodiment of the invention is explained by figures 5a-c, especially by figures 5b and 5c.

Let us assume that an odd numbered field t of normal format is received. Its sample density is increased in the same way as previously presented by figure 5 a, in other words, the sample values A (=C3), B, C and D are interpolated by using the presented calculation formats. When an even numbered field (t-1, if the previous even numbered field is examined, t+1 if the following odd numbered field is examined) is received, the new samples A = (c3'), B, C and D are calculated from the samples (c1', c2'...c12' of the field and from the samples p2', p3' and p4' of the previous field by using the same window and the same interpolators in exactly the same way as explained in the description of figure 5. The "undotted" pixels of the odd numbered field t-1 are now substituted by the "dotted" pixels of the even numbered field. The result is the situation presented in figure 5b. Until now the first embodiment (figure 5a) has been followed. Now by using the interpolated pixels A, B, C and D of the even field t-1 and the pixels in the 6*3 window of the field yet additional calculations are performed, and then as a result the final new interpolated pixels E, F, G and H of the odd numbered field are obtained. The transition arrow from figure 5b to figure 5c describes this additional operation.

These new pixel values are calculated as follows:

$$E = (A + C)/2$$

$$F = (B + D)/2$$

$$G = (C + C9')/2H = (D + C9' + c10)/3.$$

When these operations are applied to all pixels as the even numbered field is received, a new HDTV field is formed, all pixels of which are interpolated so that the original received pixels do not remain. In an odd numbered HDTV field (figure 5a) the original pixels did remain (A = c3).

The additional operations in the previous description were carried out when receiving an even numbered field but the method can also be that they are carried out on an odd numbered field and an even numbered field, as described in the description of figure 5. The text inside the brackets in figures 5a-c describes this alternative. So it is essential that the values of every other new field are corrected so that they correspond better to their place in the HDTV raster.

Therefore by the method previously described first the edge information is determined by utilizing the pixels of the field present at that point in time, and according to the direction obtained from it three new pixel values are calculated next to the known pixel c3 by utilizing pixels of the previous field in the interpolation. The new obtained values are corrected in every other field. In the reception of a video signal in accordance with the traditional format the operations described previously are continuously carried out on every pixel, in which case the result will be a field in accordance with the HDTV format, a part of which is illustrated in figure 7. The darkened squares in it signify the original pixels and the light squares are interpolated new pixels. So the sample density of the original PAL or equivalent field is enlarged into four times. The important advantage of the method is the fact that enlargement of the sample density four times is done in one stage. The usage of the 6∗3 window both in edge detection and in the interpolation of the new image points makes this possible.

## Claims

1. A method for doubling the sample density of a sampled incoming interlaced video signal simultaneously both horizontally and vertically by interpolating edge adaptively, per each known sample, in the same line, a first new sample (A) and a second new sample (B) and in the line to be formed below a third (C) and forth (D) new sample in a 6x3 window, **characterized** in that

   - the line (m-1) of the field (t) is simultaneously directed to the first row of the 6∗3 window, the following line (m+1) of the same field (t) to the last row of the said window and between these a line (m) of the previous field (t-1) must be scanned to the middle row of the window, whereupon there are six following samples c1, c2, c3, c4, c5, c6, c7, c8, c9, c10, c11, c12 in the highest and lowest row of the window and three following samples p2, p3, p4 in the middle row, and whereupon the new samples are formed to correspond to the third sample in the highest row at that point in time,
   - a summing of absolute difference signals of a sample pair in the highest row of the window and a sample pair in the lowest row of the window in nine directions is used to determine the direction of a possible edge in the window (left1, left2, left3, left4, vertical, right1, right2, right3, right 4),
   - linear operations and 3 point median operations (M3) are interpolated in the samples of the window by applying the first (A), the second (B), the third (C) and the fourth (D) new sample in the direction shown by the edge.

2. Method according to claim 1, **characterized** in that for the determination of the edge information:

   - responses are calculated for each edge directions of the samples in the highest and lowest row of the window as follows:

$$90° = c3 - c9 + c4 - c10$$

$$64° = c3 - c8 + c4 - c9$$

$$116° = c2 - c9 + c3 - c10$$

$$135° = c2 - c10 + c3 - c11$$

$$146° = c1 - c10 + c2 - c11$$

$$154° = c1 - c11 + c2 - c12$$

$$45° = c4 - c8 + c5 - c9$$

$$34° = c4 - c7 + c5 - c8$$

$$26° = c5 - c7 + c6 - c8$$

- new samples are interpolated in the direction shown by the minimum response.

3. Method according to claim 2, **characterized** in that

- the first new sample (A) is equal to the third sample (c3) in the highest row of the window and the second new sample (B) is the average of the said third sample and the sample (c4) following it,
- with the interpolation of a third (C) and a fourth (D) new sample, the product of a 3 point median interpolator is one known sample from each row of the window, and the interpolation direction is selected depending on the edge direction (90°, 64°, 116°, 135°, 146°, 154°, 45°, 34°, 26°) as follows:

| 154° | C = Med3(c1, p3, c11) |
| | D = 1/2*{Med3(c1, p3, c11)+Med3(c2, p4, c12} |

| 146° | C = 1/2*{Med3(c1, p2, c10)+Med3(c2, p3, c11)} |
| | D = Med3(c2, p3, c11) |

| 135° | C = Med3(c2, p3, c10) |
| | D = 1/2*{Med3 (c2, p3, c10) +Med3 (c3, p4, c11} |

| 116° | C = 1/2*{Med3 (c2, p2, c9) +Med3 (c3, p3, c10)} |
| | D = Med3(c3, p3, c10) |

| 90° | C = Med3(c3, p3, c9) |
| | D = 1/2*{Med3 (c3, p3, c9)+Med3(c4, p4, c10)} |

| 64° | C = 1/2*{Med3(c3, p2, c8) +Med3 (c4, p3, c9)} |
| | D - Med3(c4, p3, c9) |

| 45° | C = Med3(c4, p3, c8) |
| | D = 1/2*{Med3(c4, p3, c8)+Med3(c5, p4, c9)} |

| 34° | C = 1/2*{Med3(c4, p2, c7)+Med3(c5, p3, c8)} |
| | D = Med3(c5, p3, c8) |

| 26° | C = Med3(c5, p3, c7) |
| | D = 1/2*{Med3(c5, p3, c7)+Med3(c6, p4, c8)} |

4. Method according to claim 2, **characterized** in that the responses are calculated for several samples around the new sample C to be interpolated and consistency checking is done for the responses, the result of which is the final edge information.

5. Method according to claim 3, **characterized** in that in addition to receiving every other field

- the first obtained new sample (A) is substituted by the average of it and the third new sample (C) (A+C)/2),
- the second obtained new sample (B) is substituted by the average of it and the fourth new sample (D) ((B+D)/2),
- the third obtained new sample (C) is substituted by the average of it and the third new sample (C9) in the lowest row of the window ((C+C9)/2),
- the fourth obtained new sample (D) is substituted by the average of it and the third (C9) and the fourth (C10) samples in the lowest row of the window ((D + c9' + c10')-/3).

6. Apparatus for doubling the sample density of a sampled incoming interlaced video signal simultaneously both horizontally and vertically by interpolating edge adaptively, per each known sample, in the same line, a first new sample (A) and a second new sample (B) and in the line to be formed below a third (C) and forth (D) new sample, in a 6x3 window, into which the lines of the video signal are directed and from which it is possible to direct the samples of that point of time simultaneously to be further processed, characterized by:

- calculation means in order to calculate the absolute difference signals in various directions,
- interpolation means, which, for each known sample, interpolate edge adaptively in the same line a first new sample (A) and a second new sample (B) and for a line to be formed below, a third (C) and a forth (D) new sample, wherein

- in the first row of said window there are simultaneously six following samples ($c_1$, $c_2$, $c_3$, $c_4$, $c_5$, $c_6$) of the line (m-1) of the field (t), and in the lowest row of which there are the six following samples $c_7$, $c_8$, $c_9$, $c_{10}$, $c_{11}$, $c_{12}$ of the following line (m+1) of the same field (t) and in the middle row of which there are three samples $p_2$, $p_3$, $p_4$ of line (m) of the previous field (t-1) to be scanned between the said lines,
- the calculation means include circuits in order to sum the absolute difference signals of the sample pair in the highest row of the window and the sample pair in the lowest row of the window in nine different directions, and other circuits coupled to the said circuits in order to determine the direction of the edge in the window,
- interpolators connected to the calculation means, which interpolate in the determined edge direction new samples (A, B, C and D) by applying linear operations and 3-point median operations to the samples of the window.

7. Apparatus according to claim 6, **characterized** in that for the determination of the edge information:

- the calculation means calculates responses from the samples in the highest and the lowest row of the window to every edge direction as follows:

$$90° = c_3 - c_9 + c_4 - c_{10}$$

$$64° = c_3 - c_8 + c_4 - c_9$$

$$116° = c_2 - c_9 + c_3 - c_{10}$$

$$135° = c_2 - c_{10} + c_3 - c_{11}$$

$$146° = c_1 - c_{10} + c_2 - c_{11}$$

$$154° = c_1 - c_{11} + c_2 - c_{12}$$

$$45° = c_4 - c_8 + c_5 - c_9$$

$$34° = c_4 - c_7 + c_5 - c_8$$

$$26° = c_5 - c_7 + c_6 - c_8$$

- the interpolators interpolate the new samples in the direction determined by the minimum response.

8. Apparatus according to claim 7, **characterized** in that

- the first new sample (A) is determined to be the same as the third sample ($c_3$) in the highest row of the window and the second new sample (B) is determined to be the average of the said third new sample ($c_3$) and the sample ($C_4$) following it,
- with the interpolation of a third new sample (C) and a fourth new sample (D), the product of the 3-point median operator is one sample from each row of the window, when the results depend on the edge direction: (90°, 64°, 116°, 135°, 146°, 154°, 45°, 34°, 26°) as follows:

154°  C = Med3($c_1$, $p_3$, $c_{11}$)
    D = 1/2*{Med3($c_1$, $p_3$, $c_{11}$)+Med3($c_2$, $p_4$, $c_{12}$}

146° C =1/2*{Med3(c1, p2, c10)+Med3(c2, p3, c11)}
D = Med3(c2, p3, c11)

135° C = Med3(c2, p3, c10)
D 1/2*{Med3(c2, p3, c10)+Med3(c3, p4, c11}

116° C = 1/2*{Med3(c2, p2, c9)+Med3(c3, p3,c10)}
D = Med3(c3, p3, c10)

90° C = Med3(c3, p3, c9)
D = 1/2*{Med3(c3, p3, c9)+Med3 (c4, p4, c10)}

64° C = 1/2*{Med3(c3, p2, c8)+Med3(c4, p3, c9)}
D = Med3(c4, p3, c9)

45° C = Med3(c4, p3, c8)
D = 1/2*{Med3(c4, p3, c8)+Med3(c5, p4, c9)}

34° C = 1/2*{Med3(c4, p2, c7)+Med3(c5, p3, c8)}
D = Med3(c5, p3, c8)

26° C = Med3(c5, p3, c7)
D = 1/2*{Med3(c5, p3, c7) +Med3 (c6, p4, c8)}

9. Apparatus according to claim 8, **characterized** in that in addition to the reception of every other field, the new interpolated samples of the window are led from their input values to a means of calculating their average values, whose output value substitutes

- the first new sample (A) when the product is the first new sample (A) and the third new sample (C),
- the second new sample (B) when the product is the second new sample (B) and the fourth new sample (D),
- the third new sample (C) when the product is the said sample and the third sample (c9) in the lowest row of the window,
- the fourth new sample (D) when the product is the said sample (D) and the third (c9) and fourth sample (c10) in the lowest row of the window.

10. Apparatus according to claim 7, **characterized** in that a memory is connected to the calculation means into which the edge information related to the known samples of the window is entered, and a consistency checking circuit, which performs a consistency checking on the edge information that is read from the memory, whose result is the final edge information.

**Patentansprüche**

1. Ein Verfahren zum gleichzeitigen Verdoppeln der Probendichte in horizontaler und vertikaler Richtung eines abgetasteten ankommenden Zeilensprungvideosignals durch adaptive Randinterpolation für jede bekannte Probe einer ersten neuen Probe (A) und einer zweiten neuen Probe (B) in der gleichen Zeile sowie einer dritten neuen Probe (C) und einer vierten neuen Probe (D) in der darunter zu bildenden Zeile in einem 6∗3 Fenster, dadurch **gekennzeichnet,** daß

- die Zeile (m-1) des Feldes (t) gleichzeitig auf die erste Reihe des 6∗3 Fensters und die folgende Zeile (m+1) des gleichen Feldes (t) auf die letzte Reihe des besagten Fensters zu gerichtet werden und daß zwischen diesen Zeilen eine Zeile (m) des vorhergehenden Feldes (t-1) auf die mittlere Reihe des Fensters zu abgetastet werden muß, worauf sich in der obersten bzw. der untersten Reihe des Fensters sechs nachfolgende Proben cl, c2, c3, c4, c5, c6; c7, c8, c9, c10, cll, c12 und in der mittleren Reihe drei nachfolgende Proben p2, p3, p4 befinden und worauf die neuen Proben so gebildet werden, daß sie der dritten in der oberen Reihe zu dem betreffenden Zeitpunkt befindlichen Probe entsprechen,
- eine Summierung der Absolutdifferenzsignale eines Probenpaars in der obersten Reihe des Fensters und eines Probenpaars in der untersten Reihe des Fensters in neun Richtungen durchgeführt wird, um die Richtung eines etwaigen Randes in dem Fenster (left1, left2, left3, left4, vertical, right1, right2, right3, right4) zu bestimmen,

- in den Proben des Fensters Linearoperationen und 3-Punkt-Zentralwertoperationen (M3) durch Anlegen der neuen Proben, und zwar der ersten (A), der zweiten (B), der dritten(C) und der vierten (D), in der durch den Rand angezeigten Richtung interpoliert werden.

2. Verfahren nach Anspruch 1, dadurch **gekennzeichnet,** daß zwecks Bestimmung der Randinformation:

- hinsichtlich jeder Randrichtung der Proben in der obersten und untersten Reihe des Fensters Ansprechwerte berechnet werden, wie folgt:

$$90° = c_3 - c_9 + c_4 - c_{10}$$

$$64° = c_3 - c_8 + c_4 - c_9$$

$$116° = c_2 - c_9 + c_3 - c_{10}$$

$$135° = c_2 - c_{10} + c_3 - c_{11}$$

$$146° = c_1 - c_{10} + c_2 - c_{11}$$

$$154° = c_1 - c_{11} + c_2 - c_{12}$$

$$45° = c_4 - c_8 + c_5 - c_9$$

$$34° = c_4 - c_7 + c_5 - c_8$$

$$26° = c_5 - c_7 + c_6 - c_8$$

- in der durch den niedrigsten Ansprechwert angezeigten Richtung neue Proben interpoliert werden.

3. Verfahren nach Anspruch 2, dadurch **gekennzeichnet,** daß

- die erste neue Probe (A) der dritten Probe ($c_3$) in der obersten Reihe des Fensters gleich ist und die zweite neue Probe (B) der Mittelwert der besagten dritten Probe und der darauf folgenden Probe ($c_4$) ist,
- bei Interpolation einer dritten neuen Probe (C) und einer vierten neuen Probe (D) das Produkt eines 3-Punkt-Zentralwertinterpolators eine bekannte Probe aus jeder Reihe des Fensters ist und die Interpolationsrichtung in Abhängigkeit von der Randrichtung (90°, 64°, 116°, 135°, 146°, 154°, 45°, 34°, 26°) wie folgt ausgewählt wird:

154° $C = Med3(c_1, p_3, c_{11})$
$D = 1/2 \cdot \{Med3(c_1, p_3, c_{11}) + Med3(c_2, p_4, c_{12})\}$

146° $C = 1/2 \cdot \{Med3(c_1, p_2, c_{10}) + Med3(c_2, p_3, c_{11})\}$
$D = Med3(c_2, p_3, c_{11})$

135° $C = Med3(c_2, p_3, c_{10})$
$D = 1/2 \cdot \{Med3(c_2, p_3, c_{10}) + Med3(c_3, p_4, c_{11})\}$

116°    $C = 1/2*\{Med3(c2, p2, c9)+Med3(c3, p3, c10)\}$
$D = Med3(c3, p3, c10)$

90°    $C = Med3(c3, p3, c9)$
$D = 1/2*\{Med3(c3, p3, c9)+Med3(c4, p4, c10)\}$

64°    $C = 1/2*\{Med3(c3, p2, c8)+Med3(c4, p3, c9)\}$
$D = Med3(c4, p3, c9)$

45°    $C = Med3(c4, p3, c8)$
$D = 1/2*\{Med3 (c4, p3, c8)+Med3(c5, p4, c9)\}$

34°    $C = 1/2*\{Med3 (c4, p2, c7)+Med3(c5, p3, c8)\}$
$D = Med3(c5, p3, c8)$

26°    $C = Med3(c5, p3, c7)$
$D = 1/2*\{Med3(c5, p3, c7)+Med3(c6, p4, c8)\}$

4. Verfahren nach Anspruch 2, dadurch **gekennzeichnet,** daß die Ansprechwerte hinsichtlich mehrerer Proben rings um die neue zu interpolierende Probe (C) berechnet werden und eine Übereinstimmungskontrolle der Ansprechwerte vorgenommen wird, deren Ergebnis die endgültige Randinformation bildet.

5. Verfahren nach Anspruch 3, dadurch **gekennzeichnet**, daß zusätzlich zu dem Empfang jedes anderen Feldes

- die erste gewonnene neue Probe (A) durch den Mittelwert dieser Probe und der dritten neuen Probe (C) ((A+C)/2) substituiert wird,
- die zweite gewonnene neue Probe (B) durch den Mittelwert dieser Probe und der vierten neuen Probe (D) ((B+D)/2) substituiert wird,
- die dritte gewonnene neue Probe (C) durch den Mittelwert dieser Probe und der dritten neuen Probe (C9) in der untersten Reihe des Fensters (C+C9)/2) substituiert wird,
- die vierte gewonnene neue Probe (D) durch den Mittelwert dieser Probe und der dritten Probe (C9) sowie der vierten Probe (C10) in der untersten Reihe des Fensters substituiert wird ((D + c9' + c10')/3).

6. Apparat für gleichzeitiges horizontales und vertikales Verdoppeln der Probendichte eines abgetasteten ankommenden Zeilensprungvideosignals durch adaptive Randinterpolation für jede bekannte Probe einer ersten neuen Probe (A) und einer zweiten neuen Probe (B) in der gleichen Zeile sowie einer dritten neuen Probe (C) und einer vierten neuen Probe (D) in der darunter zu bildenden Zeile innerhalb eines 6∗3-Fensters, in das die Zeilen des Videosignals gerichtet werden und aus dem heraus die dem betreffenden Zeitpunkt entsprechenden Proben zwecks weiterer Verarbeitung gleichzeitig gerichtet werden können, **gekennzeichnet** durch:

- Berechnungsmittel zur Berechnung der Absolutdifferenzsignale in verschiedenen Richtungen,
- Interpolationsmittel, die hinsichtlich jeder bekannten Probe adaptive Randinterpolation einer ersten neuen Probe (A) und einer zweiten neuen Probe (B) in der gleichen Zeile sowie einer dritten neuen Probe (C) und einer vierten neuen Probe (D) in einer darunter zu bildenden Zeile bewirken,

wobei

- sich in der ersten Reihe des besagten Fensters gleichzeitig sechs nachfolgende Proben (cl, c2, c3, c4, c5, c6) der Zeile (m-1) des Feldes (t), in der untersten Reihe des besagten Fensters sechs nachfolgende Proben c7, c8, c9, c10, cll, c12 der folgenden Zeile (m+1) des gleichen Feldes (t) und in der mittleren Reihe des besagten Fensters drei Proben p2, p3, p4 der zwischen den besagten Zeilen abzutastenden Zeile (m) des vorhergehenden Feldes (t-1) befinden,
- die Berechnungsmittel Schaltungen zum Summieren der Absolutdifferenzsignale des Probenpaars in der obersten Reihe des Fensters und des Probenpaars in der untersten Reihe des Fensters in neun verschiedenen Richtungen umfassen, während andere Schaltungen zwecks Bestimmung der Randrichtung in dem Fenster mit den besagten Summierschaltungen gekoppelt sind,
- mit den Berechnungsmitteln verbundene Interpolatoren, die in der bestimmten Randrichtung neue Proben (A, B, C und D) durch Durchführung von Linearoperationen und 3-Punkt-Zentralwertoperationen an den Fensterproben interpolieren.

7. Apparat nach Anspruch 6, dadurch **gekennzeichnet,** daß zwecks Bestimmung der Randinformation:

- das Berechnungsmittel auf Grund der Proben in der obersten und in der untersten Reihe des Fensters in jeder Randrichtung Ansprechwerte berechnet, wie folgt:

$$90° = c3 - c9 + c4 - c10$$

$$64° = c3 - c8 + c4 - c9$$

$$116° = c2 - c9 + c3 - c10$$

$$135° = c2 - c10 + c3 - c11$$

$$146° = c1 - c10 + c2 - c11$$

$$154° = c1 - c11 + c2 - c12$$

$$45° = c4 - c8 + c5 - c9$$

$$34° = c4 - c7 + c5 - c8$$

$$26° = c5 - c7 + c6 - c8$$

- die Interpolatoren die neuen Proben in der durch den Mindestansprechwert bestimmten Richtung interpolieren.

8. Apparat nach Anspruch 7, dadurch **gekennzeichnet,** daß

- die erste neue Probe (A) als mit der dritten Probe (c3) in der obersten Reihe des Fensters identisch und die zweite neue Probe (B) als der Mittelwert der besagten dritten neuen Probe (c3) und der darauffolgenden Probe (C4) bestimmt wird,
- bei Interpolation einer dritten neuen Probe (C) und einer vierten neuen Probe (D) das Produkt des 3-Punkt-Zentralwertoperators eine Probe aus jeder Reihe des Fensters ist, wobei die Ergebnisse von der Randrichtung (90°, 64°, 116°, 135°, 146°, 154°, 45°, 34°, 26°) abhängen, wie folgt:

154°   C = Med3(c1, p3, c11)
D = 1/2*{Med3(c1, p3, c11)+Med3(c2, p4, c12)}

146°   C =1/2*{Med3(c1, p2, c10)+Med3(c2, p3, c11)}
D = Med3(c2, p3, c11)

135°   C = Med3(c2, p3, c10)
D = 1/2*{Med3(c2, p3, c10)+Med3(c3, p4, c11)}

116°   C =1/2*{Med3(c2, p2, c9)+Med3(c3, p3, c10)}
D = Med3(c3, p3, c10)

90°   C = Med3(c3, p3, c9)

$$D = 1/2*\{Med3(c3, p3, c9)+Med3(c4, p4, c10)\}$$

64°
$$C = 1/2*\{Med3 (c3, p2, c8)+Med3(c4, p3, c9)\}$$
$$D = Med3(c4, p3, c9)$$

45°
$$C = Med3(c4, p3, c8)$$
$$D = 1/2*\{Med3(c4, p3, c8)+Med3(c5, p4, c9)\}$$

34°
$$C = 1/2*\{Med3 (c4, p2, c7)+Med3(c5, p3, c8)\}$$
$$D = Med3(c5, p3, c8)$$

26°
$$C = Med3(c5, p3, c7)$$
$$D = 1/2*\{Med3 (c5, p3, c7)+Med3 (c6, p4, c8)\}$$

9. Apparat nach Anspruch 8, dadurch **gekennzeichnet**, daß zusätzlich zu dem Empfang jedes anderen Feldes die neuen interpolierten Proben des Fensters von ihren Eingabewerten ausgehend einem Mittel zur Berechnung ihrer Mittelwerte zugeführt werden, dessen Ausgangswert

   - anstelle der ersten neuen Probe (A) tritt, wenn immer das Produkt die erste neue Probe (A) und die dritte neue Probe (C) ist,
   - anstelle der zweiten neuen Probe (B) tritt, wenn immer das Produkt die zweite neue Probe (B) und die vierte neue Probe (D) ist,
   - anstelle der dritten neuen Probe (C) tritt, wenn immer das Produkt die besagte Probe und die dritte Probe (c9) in der untersten Reihe des Fensters ist,
   - anstelle der vierten neuen Probe (D) tritt, wenn immer das Produkt die besagte Probe (D), die dritte Probe (c9) und die vierte Probe (c10) in der unteren Reihe des Fensters ist.

10. Apparat nach Anspruch 7, dadurch **gekennzeichnet,** daß ein Speicher mit dem Berechnungsmittel, in das die bekannten Proben des Fensters betreffende Randinformation eingespeist wird, sowie mit einer Übereinstimmungskontrollschaltung in Verbindung steht, die hinsichtlich der aus dem Speicher abgelesenen Randinformation eine Übereinstimmungskontrolle durchführt, deren Ergebnis die endgültige Randinformation bildet.

**Revendications**

1. Méthode pour doubler la densité d'échantillonnage d'un signal vidéo entrelacé entrant échantillonné simultanément horizontalement et verticalement en interpolant un bord de manière adaptative, par chaque échantillon connu, dans la même ligne, un premier nouvel échantillon (A) et un second nouvel échantillon (B) et, dans la ligne à former en dessous, un troisième nouvel échantillon (C) et un quatrième nouvel échantillon (D) dans une fenêtre de 6x3, caractérisée en ce que:

   - la ligne (m-1) du champ (t) est dirigée simultanément vers la première rangée de la fenêtre 6x3, la ligne suivante (m+1) du même champ (t) vers la dernière rangée de ladite fenêtre et entre celles-ci une ligne (m) du champ précédent (t-1) doit être balayée vers la rangée du milieu de la fenêtre, sur quoi il y a les six échantillons suivants c1, c2, c3, c4, c5, c6; c7, c8, c9, c10, c11, c12 dans la rangée la plus haute et dans la rangée la plus basse de la fenêtre et les trois échantillons suivants p2, p3, p4 dans la rangée du milieu, et sur quoi les nouveaux échantillons sont formés pour correspondre au troisième échantillon dans la rangée la plus haute à cet instant,
   - une somme de signaux de différence absolue de deux échantillons dans la rangée la plus haute de la fenêtre et de deux échantillons dans la rangée la plus basse de la fenêtre dans neuf directions est utilisée pour déterminer la direction d'un bord possible dans la fenêtre (left1, left2, left3, left4, vertical, right1, right2, right3, right4),
   - des opérations linéaires et des opérations de valeur médiane de 3 points (M3) sont interpolées dans les échantillons de la fenêtre en appliquant le premier (A), le second (B), le troisième (C) et le quatrième (D) nouveaux échantillons dans la direction montrée par le bord.

2. Méthode selon la revendication 1, caractérisée en ce que, pour la détermination de l'information de bord :

- des réponses sont calculées pour chaque direction de bord des échantillons dans la rangée la plus haute et dans la rangée la plus basse de la fenêtre, comme suit :

$$90° = c3 - c9 + c4 - c10$$

$$64° = c3 - c8 + c4 - c9$$

$$116° = c2 - c9 + c3 - c10$$

$$135° = c2 - c10 + c3 - c11$$

$$146° = c1 - c10 + c2 - c11$$

$$154° = c1 - c11 + c2 - c12$$

$$45° = c4 - c8 + c5 - c9$$

$$34° = c4 - c7 + c5 - c8$$

$$26° = c5 - c7 + c6 - c8$$

- de nouveaux échantillons sont interpolés dans la direction montrée par la réponse minimale.

3. Méthode selon la revendication 2, caractérisée en ce que :

- le premier nouvel échantillon (A) est égal au troisième échantillon (c3) dans la rangée la plus haute de la fenêtre et le second nouvel échantillon (B) est la moyenne dudit troisième échantillon et de l'échantillon (c4) qui le suit,
- avec l'interpolation d'un troisième nouvel échantillon (C) et d'un quatrième nouvel échantillon (D), le produit d'un interpolateur de valeur médiane de 3 points est un premier échantillon connu provenant de chaque rangée de la fenêtre et la direction d'interpolation est choisie en fonction de la direction du bord (90°, 64°, 116°, 135°, 146°, 154°, 45°, 34°, 26°) comme suit :

154°    C = Med3(c1, p3, c11)
        D =1/2*{Med3(c1, p3, c11)+ Med3(c2, p4, c12)}
146°    C =1/2*{Med3(c1, p2, c10)+ Med3(c2, p3, c11)}
        D = Med3(c2, p3, c11)
135°    C = Med3(c2, p3, c10)
        D =1/2*{Med3(c2, p3, c10)+ Med3(c3, p4, c11)}
116°    C =1/2*{Med3(c2, p2, c9)+ Med3(c3, p3, c10)}
        D = Med3(c3, p3, c10)
90°     C = Med3(c3, p3, c9)
        D =1/2*{Med3(c3, p3, c9)+ Med3(c4, p4, c10)}
64°     C =1/2*{Med3(c3, p2, c8)+ Med3(c4, p3, c9)}
        D = Med3(c4, p3, c9)
45°     C = Med3(c4, p3, c8)
        D =1/2*{Med3(c4, p3, c8)+ Med3(c5, p4, c9)}
34°     C =1/2*{Med3(c4, p2, c7)+ Med3(c5, p3, c8)}
        D = Med3(c5, p3, c8)

26°     C = Med3(c5, p3, c7)
        D =1/2*{Med3(c5, p3, c7)+ Med3(c6, p4, c8)}

**4.** Méthode selon la revendication 2, caractérisée en ce que les réponses sont calculées pour plusieurs échantillons autour du nouvel échantillon C à interpoler et une vérification de cohérence est effectuée pour les réponses, dont le résultat est l'information de bord finale.

**5.** Méthode selon la revendication 3, caractérisée en ce que, en plus de recevoir un champ sur deux

- le premier nouvel échantillon obtenu (A) est remplacé par la moyenne de celui-ci et du troisième nouvel échantillon (C) ((A+C)/2),
- le second nouvel échantillon obtenu (B) est remplacé par la moyenne de celui-ci et du quatrième nouvel échantillon (D) ((B+D)/2),
- le troisième nouvel échantillon obtenu (C) est remplacé par la moyenne de celui-ci et du troisième nouvel échantillon (C9) dans la rangée la plus basse de la fenêtre ((C+C9)/2),
- le quatrième nouvel échantillon obtenu (D) est remplacé par la moyenne de celui-ci et du troisième (C9) et du quatrième (C10) échantillons dans la rangée la plus basse de la fenêtre ((D+C9'+C10')/3).

**6.** Appareil pour doubler la densité d'échantillonnage d'un signal vidéo entrelacé entrant échantillonné simultanément horizontalement et verticalement en interpolant un bord, de manière adaptative, par chaque échantillon connu, dans la même ligne, un premier nouvel échantillon (A) et un second nouvel échantillon (B) et, dans la ligne à former en dessous, un troisième nouvel échantillon (C) et un quatrième nouvel échantillon (D) dans une fenêtre de 6x3, dans lequel les lignes du signal vidéo sont dirigées et à partir duquel il est possible de diriger les échantillons de cet instant, simultanément, pour être davantage traités, caractérisé par :

- des moyens de calcul destinés à calculer les signaux de différence absolue dans diverses directions,
- des moyens d'interpolation qui, pour chaque échantillon connu, interpolent un bord, de manière adaptative, dans la même ligne, un premier nouvel échantillon (A) et un second nouvel échantillon (B) et, pour une ligne à former en dessous, un troisième nouvel échantillon (C) et un quatrième nouvel échantillon (D), dans lequel :
- dans la première rangée de ladite fenêtre il y a simultanément les six échantillons suivants (c1, c2, c3, c4, c5, c6) de la ligne (m-1) du champ (t) et dans la rangée la plus basse de ladite fenêtre il y a les six échantillons suivants c7, c8, c9, c10, c11, c12 de la ligne suivante (m+1) du même champ (t) et dans la rangée du milieu de ladite fenêtre il y a trois échantillons p2, p3, p4 de la ligne (m) du champ précédent (t-1) à balayer entre lesdites lignes,
- les moyens de calcul comprennent des circuits afin d'additionner les signaux de différence absolue des deux échantillons dans la rangée la plus haute de la fenêtre et des deux échantillons dans la rangée la plus basse de la fenêtre dans neuf directions différentes et d'autres circuits couplés auxdits circuits afin de déterminer la direction du bord de la fenêtre,
- des interpolateurs reliés aux moyens de calcul, qui interpolent, dans la direction de bord déterminée, de nouveaux échantillons (A, B, C et D) en appliquant des opérations linéaires et des opérations de valeur de médiane de 3 points aux échantillons de la fenêtre.

**7.** Appareil selon la revendication 6, caractérisé en ce que, pour la détermination de l'information de bord :

- les moyens de calcul calculent des réponses à partir des échantillons dans la rangée la plus haute et dans la rangée la plus basse de la fenêtre pour chaque direction de bord, comme suit :

$$90° = c3 - c9 + c4 - c10$$

$$64° = c3 - c8 + c4 - c9$$

$$116° = c2 - c9 + c3 - c10$$

$$135° = c2 - c10 + c3 - c11$$

$$146° = c1 - c10 + c2 - c11$$

$$154° = c1 - c11 + c2 - c12$$

$$45° = c4 - c8 + c5 - c9$$

$$34° = c4 - c7 + c5 - c8$$

$$26° = c5 - c7 + c6 - c8$$

- les interpolateurs interpolent les nouveaux échantillons dans la direction déterminée par la réponse minimale.

8. Appareil selon la revendication 7, caractérisé en ce que :

- le premier nouvel échantillon (A) est déterminé pour être identique au troisième échantillon (c3) dans la rangée la plus haute de la fenêtre et le second nouvel échantillon (B) est déterminé pour être la moyenne dudit nouveau troisième échantillon (c3) et de l'échantillon (c4) qui le suit,
- avec l'interpolation d'un troisième nouvel échantillon (C) et d'un quatrième nouvel échantillon (D), le produit de l'opérateur de valeur médiane de 3 points est un premier échantillon provenant de chaque rangée de la fenêtre, lorsque les résultats dépendent de la direction du bord (90°, 64°, 116°, 135°, 146°, 154°, 45°, 34°, 26°) comme suit :

| | | |
|---|---|---|
| 154° | C = Med3(c1, p3, c11) | |
| | D =1/2*{Med3(c1, p3, c11)+ Med3(c2, p4, c12)} | |
| 146° | C =1/2*{Med3(c1, p2, c10)+ Med3(c2, p3, c11)} | |
| | D = Med3(c2, p3, c11) | |
| 135° | C = Med3(c2, p3, c10) | |
| | D =1/2*{Med3(c2, p3, c10)+ Med3(c3, p4, c11)} | |
| 116° | C =1/2*{Med3(c2, p2, c9)+ Med3(c3, p3, c10)} | |
| | D = Med3(c3, p3, c10) | |
| 90° | C = Med3(c3, p3, c9) | |
| | D =1/2*(Med3(c3, p3, c9)+ Med3(c4, p4, c10)} | |
| 64° | C =1/2*{Med3(c3, p2, c8)+ Med3(c4, p3, c9)} | |
| | D = Med3(c4, p3, c9) | |
| 45° | C = Med3(c4, p3, c8) | |
| | D =1/2*{Med3(c4, p3, c8)+ Med3(c5, p4, c9)} | |
| 34° | C =1/2*{Med3(c4, p2, c7)+ Med3(c5, p3, c8)} | |
| | D = Med3(c5, p3, c8) | |
| 26° | C = Med3(c5, p3, c7) | |
| | D =1/2*{Med3(c5, p3, c7)+ Med3(c6, p4, c8)} | |

9. Appareil selon la revendication 8, caractérisé en ce qu'en plus de la réception d'un champ sur deux, les nouveaux échantillons interpolés de la fenêtre sont menés depuis leurs valeurs d'entrée vers des moyens de calcul de leurs valeurs moyennes, dont la valeur de sortie remplace :

- le premier nouvel échantillon (A) lorsque le produit est le premier nouvel échantillon (A) et le troisième nouvel échantillon (C),
- le second nouvel échantillon (B) lorsque le produit est le second nouvel échantillon (B) et le quatrième nouvel échantillon (D),
- le troisième nouvel échantillon (C) lorsque le produit est ledit échantillon et le troisième échantillon (c9) dans la rangée la plus basse de la fenêtre,
- le quatrième nouvel échantillon (D) lorsque le produit est ledit échantillon (D) et le troisième échantillon (c9) et le quatrième échantillon (c10) dans la rangée la plus basse de la fenêtre.

**10.** Appareil selon la revendication 7, caractérisé en ce qu'une mémoire est connectée aux moyens de calcul dans laquelle l'information de bord concernant les échantillons connus de la fenêtre est entrée et à un circuit de vérification de cohérence, qui exécute une vérification de cohérence sur l'information de bord qui est lue à partir de la mémoire, dont le résultat est l'information de bord finale.

| c1 | c2 | c3 | c4 | c5 | c6 |
|----|----|----|----|----|----|
|    |    | ?  |    |    |    |
| c7 | c8 | c9 | c10 | c11 | c12 |

LINE (m-1)  FIELD (t)

LINE (m)  FIELD (t-1)

LINE (m+1)  FIELD (t)

**Fig. 1**

(a) VERTICAL (90)

(b) LEFT1 (116)

(c) RIGHT1 (64)

(d) LEFT2 (135)

(e) RIGHT2 (45)

(f) LEFT3 (146)

(g) RIGHT3 (34)

(h) LEFT4 (154)

(i) RIGHT4 (26)

**Fig. 2**

| c1 | c2 | c3 | c4 | c5 | c6 |
|----|----|----|----|----|----|
|    | p2 | p3 | p4 |    |    |
| c7 | c8 | c9 | c10 | c11 | c12 |

LINE (m-1)   FIELD (t)

LINE (m)    FIELD (t-1)

LINE (m+1)   FIELD (t)

## Fig. 3

| c1 |  | c2 |  | c3 | ? | c4 |  | c5 |  | c6 |  |
|----|--|----|--|----|---|----|--|----|--|----|--|
|    |  |    |  |    | ? | ?  |  |    |  |    |  |
| c7 |  | c8 |  | c9 |  | c10 |  | c11 |  | c12 |  |
|    |  |    |  |    |  |    |  |    |  |    |  |

LINE (m'-2), FIELD (t)

LINE (m'), FIELD (t)

LINE (m'+2), FIELD (t)

LINE (m'+4), FIELD (t)

## Fig. 4

## Fig. 7

20

ODD FIELD       (EVEN FIELD)

| c1 | | c2 | | A | B | c4 | | c5 | | c6 | | LINE (m'-2), FIELD (t) |
|---|---|---|---|---|---|---|---|---|---|---|---|---|
| | | | | C | D | | | | | | | LINE (m'), FIELD (t) |
| c7 | | c8 | | c9 | | c10 | | c11 | | c12 | | LINE (m'+2), FIELD (t) |
| | | | | | | | | | | | | LINE (m'+4), FIELD (t) |

## Fig. 5 a

EVEN FIELD       (ODD FIELD)

| c1' | | c2' | | A | B | c4' | | c5' | | c6' | | LINE (m'-1), FIELD (t-1) |
|---|---|---|---|---|---|---|---|---|---|---|---|---|
| | | | | C | D | | | | | | | LINE (m'+1), FIELD (t-1) |
| c7' | | c8' | | c9' | | c10' | | c11' | | c12' | | LINE (m'+3), FIELD (t-1) |
| | | | | | | | | | | | | LINE (m'+5), FIELD (t-1) |

## Fig. 5 b

EVEN FIELD       (ODD FIELD)

| c1' | | c2' | | E | F | c4' | | c5' | | c6' | | LINE (m'-1), FIELD (t-1) |
|---|---|---|---|---|---|---|---|---|---|---|---|---|
| | | | | G | H | | | | | | | LINE (m'+1), FIELD (t-1) |
| c7' | | c8' | | c9' | | c10' | | c11' | | c12' | | LINE (m'+3), FIELD (t-1) |
| | | | | | | | | | | | | LINE (m'+5), FIELD (t-1) |

## Fig. 5 c

(a) VERTICAL (90)

(b) LEFT1 (116)

(c) RIGHT1 (64)

(d) LEFT2 (135)

(e) RIGHT2 (45)

(f) LEFT3 (146)

(g) RIGHT3 (34)

(h) LEFT4 (154)

(i) RIGHT4 (26)

**Fig. 6**